(19) Europäisches Patentamt
European Patent Office
Office européen des brevets

(11) EP 2 236 463 B1

(12) # EUROPÄISCHE PATENTSCHRIFT

(45) Veröffentlichungstag und Bekanntmachung des Hinweises auf die Patenterteilung:
**26.11.2014 Patentblatt 2014/48**

(21) Anmeldenummer: **10156899.6**

(22) Anmeldetag: **18.03.2010**

(51) Int Cl.:
***C02F 1/44** (2006.01)*
***C02F 1/68** (2006.01)*
***C02F 9/00** (2006.01)*
***B01D 61/02** (2006.01)*
***B01D 61/04** (2006.01)*
*C02F 101/30 (2006.01)*
*C02F 101/20 (2006.01)*
*C02F 103/16 (2006.01)*

(54) **Umkehrosmoseverfahren zur Aufbereitung von Spülwasser enthaltend pollyvalente Metall-Kationen**

Reverse osmosis method for preparing rinsing water containing polyvalent metal cations

Procédé d’osmose inverse destiné à la préparation d’eau de lavage contenant des cations métalliques polyvalents

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.04.2009 DE 102009002144**

(43) Veröffentlichungstag der Anmeldung:
**06.10.2010 Patentblatt 2010/40**

(73) Patentinhaber: **Henkel AG & Co. KGaA**
**40589 Düsseldorf (DE)**

(72) Erfinder:
- **BROUWER, Jan-Willem**
  **47877, Willich (NL)**
- **KRÖMER, Jens**
  **40225, Düsseldorf (DE)**
- **DIETZ, Stefan**
  **55457, Gensingen (DE)**
- **EPPLER, Hans-Bernhard**
  **98574, Schmalkalden (DE)**
- **IRMSCHER, Udo**
  **04289, Leipzig (DE)**
- **SCHEFFLER, Olaf**
  **58809, Neuenrade (DE)**
- **MANDERSCHEID, Karl**
  **50354, Hürth-Fischenich (DE)**

(56) Entgegenhaltungen:
**EP-A1- 0 089 189**
**EP-A1- 1 424 311**
**EP-A2- 0 210 590**
**WO-A1-2006/128730**
**US-A- 4 618 428**
**US-A1- 2003 226 807**
**US-A1- 2004 050 793**
**US-A1- 2005 056 589**
**US-A1- 2008 060 999**
**US-A1- 2008 161 222**

- **HUANG Y-C ET AL: "SEPARATION OF HEAVY METALS FROM INDUSTRIAL WASTE STREAMS BY MEMBRANE SEPARATION TECHNOLOGY", WASTE MANAGEMENT, ELSEVIER, NEW YORK, NY, US, Bd. 13, Nr. 5/07, 1. Januar 1993 (1993-01-01), Seiten 481-501, XP000415216, ISSN: 0956-053X, DOI: 10.1016/0956-053X(93)90079-C**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Aufbereitung von Spülwasser aus der Reinigung von nasschemisch behandelten Bauteilen, die zumindest teilweise metallische Oberflächen aufweisen, enthaltend polyvalente Metall-Kationen $Me_i$, wobei zumindest ein Teil des Spülwassers $A_0$ eine Cross-Flow-Filtrationsstufe $F_1$ oder kaskadierend eine Anzahl n an Cross-Flow-Filtrationsstufen $F_{1...n}$ durchläuft, wobei jede Filtrationsstufe $F_n$ mit dem Permeat $A_{n-1}$ der vorherigen Filtrationsstufe $F_{n-1}$ gespeist wird, und als Cross-Flow-Filtrationsstufe zumindest eine Umkehrosmosestufe vorliegt, mittels des Zusatzes zumindest einer wasserlöslichen chelatbildenden organischen Verbindung, die zumindest eine Phosphonat-Gruppe aufweist, so dass eine Verblockung der Umkehrosmosemembran unterbleibt, aber gleichzeitig die Trenneigenschaft derselben nicht nachteilig beeinflusst wird, indem die Zudosierung der chelatbildenden Verbindung kontrolliert und in Abhängigkeit von der Konzentration der polyvalenten metall-Kationen $Me_i$ erfolgt.

Die Aufbereitung von Spülwasser für die Reinigung von nasschemisch behandelten Bauteilen ist ein in einem Gesamtprozess integriertes Verfahren, das stets die Bereitstellung von Spülwasser, also das Einsparen von Frischwasser, und im Einzelfall auch die Bereitstellung von Wirkkomponenten der nasschemischen Behandlungsstufe zum Ziel hat, so dass ein möglichst Ressourcen schonender und ökonomischer Betrieb des Gesamtprozesses realisiert ist.

Speziell in der Karosseriefertigung der Automobilindustrie oder der Vorbehandlung von Halbzeugen in der Zulieferindustrie wird mittlerweile eine Vielzahl metallischer Materialien behandelt und dabei gereinigt, korrosionsschützend vorbehandelt oder lackiert. Dies geschieht zumeist in aufeinander folgenden Einzelschritten, die wiederum zumeist durch einen Spülschritt voneinander entkoppelt sind. Unter den gängigen metallischen Materialien befinden sich neben Eisen und Zink auch Bauteile aus Aluminium oder Magnesium. Die nasschemische Behandlung dieser Bauteile bedingt, dass die in den Materialien enthaltenden Metalle als polyvalente Kationen in Lösung gehen und aus der Behandlungsstufe über den auf dem Bauteil anhaftenden Nassfilm und über sogenannte schöpfende Teile in das Spülwasser gelangen. Polyvalente Metall-Kationen können auch bereits in der Behandlungsstufe selbst als Wirkkomponenten enthalten sein, beispielsweise bei Tri-Kationen-Bädern in der Phosphatierung, die Zink-, Mangan- und Nickel-Ionen enthalten.

Bei der Aufbereitung von Spülwasser aus der nasschemischen Behandlung von Bauteilen mit metallischen Oberflächen gilt es also neben den üblichen Verunreinigungen wie Tensiden, Ölen, Fetten und dispergierten Feststoffen auch polyvalente Metall-Kationen möglichst quantitativ aus dem Spülwasser zu entfernen, um den von diesen Ionen befreiten Anteil des Spülwassers wieder ins Spülbad zur Reinigung der Oberflächen rückspeisen zu können. Gleichzeitig sollte der polyvalente Metall-Kationen-Anteil insofern dieser Wirkkomponenten der Behandlungsstufe enthält, möglichst wieder für die Behandlung der Bauteile zurückgeführt werden können.

Im Stand der Technik sind verschiedenen Filtrationstechniken bekannt, die eine solche Verfahrensweise prinzipiell erlauben. Während ein überwiegender Teil der suspendierten Feststoffe durch konventionelle Filtertechniken quantitativ aus dem Spülwasser entfernt werden kann, gelingt die weitere Aufarbeitung üblicherweise mit Hilfe von Cross-Flow-Filtrationstechniken, die eine größen- und molekulargewichtsabhängige Trennung von gelösten und dispergierten Bestandteilen des Spülwassers erlauben. So können mit der Ultrafiltration bereits Tenside, Öle, Fette und dispergierte Feststoffe mit Molekulargewichten von über 10 kD und Partikelgrößen größer als 0,01 $\mu$m im Retentat zurückgehalten werden. Mit einer nachfolgenden Aufarbeitung des Permeats der Ultrafiltration mittels Umkehrosmose ist schließlich die Abtrennung und Aufkonzentrierung der polyvalenten Metall-Kationen und damit auch die Rückgewinnung von Spülwasser möglich. Allerdings besteht das technische Problem, das durch die Aufkonzentrierung der Metall-Kationen im Retentat der Umkehrosmose eine Verblockung der Umkehrosmosemembran auftreten kann, wenn Löslichkeitsprodukte entsprechender Metallsalze überschritten werden. Die Aufkonzentrierung im Retentatkreislauf der Umkehrosmose ist direkt proportional zum Quotienten aus dem Eingangsvolumenstrom in die Umkehrosmosestufe und der Differenz aus Eingangs- und Permeatvolumenstrom und erfolgt üblicherweise mit einem Faktor 4-10.

Die EP 1424311 offenbart eine mehrstufige Umkehrosmosebehandlung, bspw. für die Entsalzung von Meerwasser, bei der eine kontinuierliche Performance der Umkehrosmosemembran auf Basis von aromatischen Polyamiden durch die Komplexierung von Eisen- und Mangan-Ionen mit Chelatbildnern aufrecht erhalten werden kann, ohne dass eine Degradation der Membran eintritt. Allerdings lehrt die EP 1424311, dass grundsätzlich die Zugabe des Chelatbildners nicht limitiert ist. In der Praxis zeigt sich jedoch, dass die Trenneigenschaften der Umkehrosmosemembran deutlichen Schwankungen unterliegt, insbesondere dann, wenn bei konstanter Dosierung des Chelatbildners der Stoffstrom an polyvalenten Kationen in das Retentat der Umkehrosmose mit der Zeit variiert. Die Zusammensetzung des aufzubereitenden Spülwassers variiert in der Behandlung von metallischen Bauteilen jedoch zumeist in gleichem Maße wie die Zusammensetzung der zu behandelnden Bauteile oder die Oberflächenanteile der verschiedenen metallischen Elemente der zu behandelnden Bauteile, so dass die Lehre der EP 1424311 weiterentwickelt werden muss.

Die WO 2006/128730 A1 offenbart ein Verfahren zur Aufarbeitung von Industrie-Abwasser enthaltend polyvalente Metall-Kationen, wobei ein Teil des Abwassers kaskadierend zwei Umkehrosmosestufen durchläuft und die in Kaskade befindliche Umkehrosmose mit dem Permeat der vorherigen Umkehrosmose gespeist wird. Dem Industriewasser werden in diesem Verfahren sogenannte Scale-Inhibitoren hinzugegeben, wobei die Dosierung auf Grundlage chemischer Retentat-Analysen effizient vorgenommen werden kann.

Die Aufgabe der vorliegenden Erfindung besteht demnach darin, die bestehenden Verfahren zur Aufbereitung von Spülwasser aus der Reinigung von vorbehandelten Metalloberflächen mittels Cross-Flow-Filtrationstechniken weiterzuentwickeln, wobei sowohl die Membranverblockung der Filtrationsstufen durch im Retentat aufkonzentrierte Metallsalze weitgehend unterbunden als auch eine konstante Trennleistung der Umkehrosmosemembran bei schwankenden Zusammensetzungen des Spülwassers gewährleistet werden soll, so dass ein wirtschaftlicher Betrieb bestehender Anlagen zur Spülwasseraufbereitung ermöglicht wird, der die effektive Wiedergewinnung von Spülwasser und Wirkkomponenten für die Vorbehandlung umfasst.

Diese Aufgabe wird gelöst von einem Verfahren zur Aufbereitung von Spülwasser aus der Reinigung von nasschemisch behandelten Bauteilen, die zumindest teilweise metallische Oberflächen aufweisen, enthaltend polyvalente Metall-Kationen $Me_i$, wobei zumindest ein Teil des Spülwassers $A_0$ eine Cross-Flow-Filtrationsstufe $F_1$ oder kaskadierend eine Anzahl n an Cross-Flow-Filtrationsstufen $F_{1...n}$ durchläuft, wobei jede Filtrationsstufe $F_n$ mit dem Permeat $A_{n-1}$ der vorherigen Filtrationsstufe $F_{n-1}$ gespeist wird, und zumindest eine Filtrationsstufe vorliegt, die eine Umkehrosmosestufe darstellt, wobei das Permeat der ersten Umkehrosmosestufe keine weitere Stufe einer anderen Art der Cross-Flow-Filtration als der Umkehrosmose durchläuft, und der Teil des Spülwassers $A_0$ oder das bis zu dieser ersten von m Umkehrosmosestufen hiervon kaskadierte Spülwasser $A_{1...n-m}$ mit einer solchen Menge an wasserlöslichen chelatbildenden organischen Verbindungen, die zumindest eine Phosphonat-Gruppe aufweisen, versetzt wird, dass das molare Verhältnis von Phosphonat-Gruppen zu polyvalenten Metall-Kationen $\Sigma Me_i$ im Retentat der ersten Umkehrosmose größer als 1 : 1, aber nicht größer als 3 : 1 ist.

Unter Cross-Flow-Filtration werden in der vorliegenden Erfindung Filtrationsmethoden bezeichnet, bei denen das zu filternde Spülwasser tangential an einer Filtermembran vorbeiströmt ("Cross-Flow"). Der gleichzeitig stattfindende Stofftransport senkrecht zur Filtermembran bewirkt, das je nach den spezifischen Trenneigenschaften der Filtermembran gelöste und/oder dispergierte Komponenten zurückgehalten werden (Retentat), während zumindest das wässrige Medium die Membran aufgrund des Druckabfalls innerhalb derselbigen passiert (Permeat). Dem Fachmann bekannte Cross-Flow-Filtrationsmethoden sind die Mikrofiltration, Ultrafiltration, Nanofiltration und die Umkehrosmose. Diese Cross-Flow-Filtrationsmethoden unterscheiden sich im Wesentlichen voneinander bezüglich ihrer Größenausschlussgrenze, d.h. derjenigen Partikelgröße oder demjenigen Molekulargewicht ab dem die dispergierten oder gelösten Komponenten von der Filtermembran zurückgehalten werden.

Alternativ kann im erfindungsgemäßen Verfahren auch die spezifische Leitfähigkeit des Permeates als Kontroll- und Steuergröße für die Dosierung des Chelatbildners herangezogen werden, die für eine dauerhafte Verfahrenskontrolle vorzugsweise im Permeat kontinuierlich bestimmt wird, so dass die Dosierung des Chelatbildners unmittelbar angepasst werden kann, um eine optimale Arbeitsweise der Umkehrosmosestufe zu gewährleisten. Hierfür muss der Teil des Spülwassers $A_0$ oder das bis zu dieser ersten von m Umkehrosmosestufen hiervon kaskadierte Spülwasser $A_{1...n-m}$ mit einer Menge der wasserlöslichen chelatbildenden organischen Verbindungen, die zumindest eine Phosphonat-Gruppe aufweisen, versetzt werden, wobeidas molare Verhältnis von Phosphonat-Gruppen zu polyvalenten Metall-Kationen $\Sigma Me_i$ im Retentat der ersten Umkehrosmose keine Werte überschreitet, für die die spezifische Leitfähigkeit im Permeat der ersten Umkehrosmosestufe größer als 800 $\mu$S/cm, vorzugsweise größer als 500 $\mu$S/cm wird.

Auf ein Überschreiten dieser Toleranzwerte für die spezifische Leitfähigkeit des Permeats kann im Betrieb des erfindungsgemäßen Verfahrens beispielsweise mit einem zeitweisen Stopp der Zudosierung der chelatbildenden Verbindung reagiert werden, der solange andauert, bis die Leitfähigkeitswerte wieder im bevorzugten Bereich liegen.

Die nachteilige Veränderung der Trenneigenschaften der Umkehrosmosemembran durch einen erhöhten Anteil an chelatbildenden Verbindungen im Retentat der Umkehrosmose hat sich in der Praxis als reversibel erwiesen, so dass eine Regelung der Dosierung der chelatbildenden Verbindungen wie zuvor beschrieben ermöglicht wird, ohne dass eine dauerhafte Schädigung der Membran eintritt. Das Phänomen der veränderten Membraneigenschaften aufgrund eines erhöhten Anteils des Chelatbildners konnte insbesondere für Umkehrosmosemembranen auf Polyamid-Basis festgestellt werden, jedoch erlaubt eine Steuerung der Dosierung des Chelatbildners über die spezifische Leitfähigkeit des Permeats eine von der spezifisch verwendeten Membran unabhängige optimale Verfahrensweise.

Das erfindungsgemäße Verfahren leistet, wie bereits beschrieben, die Aufbereitung von Spülwasser aus der Reinigung von nasschemisch behandelten, metallische Oberflächen aufweisenden Bauteilen, wobei das Spülwasser polyvalente Metall-Kationen $Me_i$ enthält. Die polyvalenten Metall-Kationen $Me_i$ werden dabei über den auf dem Bauteil anhaftenden Nassfilm oder schöpfende Teile desselben in das Spülwasser eingeschleppt und können demnach sowohl Wirkkomponenten der Behandlungsstufe als auch Metall-Kationen der metallischen Oberflächen des behandelten Bauteils sein. Polyvalente Metall-Kationen $Me_i$ sind erfindungsgemäß im Spülwasser enthaltene Kationen mit einer Ladungszahl größer als 1. Polyvalente Metall-Kationen $Me_i$ besitzen in neutral bis alkalisch eingestellten Medien oder in Gegenwart von Oxoanionen niedrige Löslichkeitsprodukte und bedingen daher im Retentat der Umkehrosmose, in dem eine Aufkonzentrierung der gelösten polyvalenten Metall-Kationen stattfindet, die unerwünschte Verblockung der polymeren Cross-Flow-Membran. Typische polyvalente Metall-Kationen Me;, die verfahrensbedingt in das Spülwasser eingeschleppt werden, sind Zink, Eisen, Nickel, Cobalt, Mangan, Kalzium, Magnesium und/oder Aluminium. Sie entstammen entweder der nasschemischen Behandlung und sind Wirkkomponenten bspw. einer passivierenden Vorbehandlung

(Phosphatierung) oder werden von einem Beizangriff auf das Bauteil, das bspw. metallische Oberflächen von Zink, Eisen, Magnesium und/oder Aluminium aufweist, in das Spülwasser eingeschleppt.

Die chelatbildende organische Verbindung kann erfindungsgemäß bereits vor der ersten Filtrationsstufe $F_1$ oder vor einer beliebigen anderen Filtrationstufe $F_n$ dem Spülwasser oder dem kaskadierten Spülwasser hinzugegeben werden, vorausgesetzt die Dosierung erfolgt im jeden Fall vor der ersten von m Umkehrosmosestufen, wobei m eine ganze Zahl im Bereich von 1 bis vorzugsweise nicht mehr als 4 ist. Unabhängig davon, vor welcher Filtrationsstufe die Dosierung erfolgt, wird erfindungsgemäß so dosiert, dass das jeweils niedrigste Löslichkeitsprodukt aller im Retentat der Umkehrosmose möglichen Salze $Me_mX_n$ eines polyvalenten Metall-Kations $Me_i$ jeweils größer ist als das entsprechende Ionenprodukt aus der jeweiligen Anionkonzentration X mit der um die auf den Anteil der Metall-Kationen $Me_i$ am Gesamtgehalt der polyvalenten Metall-Kationen $\Sigma Me_i$ gewichteten Konzentration der Phosphonat-Gruppen der wasserlöslichen chelatbildenden organischen Verbindung verminderten Konzentration des betreffenden polyvalenten Metall-Kations $Me_i$ im Retentat der Umkehrosmose.

Es soll also folgender Zusammenhang gemäß Gleichung (I) stets erfüllt vorliegen:

$$K(L_i) > c(X_i)^n \cdot [c(Me_i) - \frac{c(Me_i)}{\Sigma c(Me_i)} \cdot c(PO_3)]^m \qquad (I)$$

| | |
|---|---|
| $K(L_i)$: | niedrigstes Löslichkeitsprodukt eines Salzes $Me_mX_n$ des polyvalenten Metall-Kations $Me_i$ im Retentat der Umkehrosmose (UO) |
| $c(X_i)$: | Konzentration des Anions $X_i$ des Salzes $Me_mX_n$ mit dem niedrigsten Löslichkeitsprodukt im Retentat der UO [mol/l] |
| $c(Me_i)$: | Konzentration des polyvalenten Metall-Kations $Me_i$ im Retentat der UO [mol/l] |
| $\Sigma c(Me_i)$: | Gesamtkonzentration aller Metall-Kationen $Me_i$ im Retentat der UO [mol/l] |
| $c(PO_3)$: | Konzentration der Phosphonat-Gruppen der chelatbildenden organischen Verbindung im Retentat der UO [mol/l] |
| m, n: | stöchiometrische Faktoren des Salzes $Me_mX_n$ |

Entsprechend dieser Bedingung für die Dosierung der chelatbildenden organischen Verbindung genügt es, gerade soviel Phosphonat-Gruppen in Form der chelatbildenden organischen Verbindung anzubieten, dass die jeweiligen niedrigsten Löslichkeitsprodukte der Salze der polyvalenten Metall-Kationen im Retentat der Umkehrosmose gerade noch unterschritten werden. Auf diese Weise kann die Membranverblockung durch beginnende Ausfällung der jeweiligen Salze wirksam unterbunden werden. Technisch ist diese Verfahrensweise jedoch sehr anspruchsvoll, da zum einen die Konzentrationen aller polyvalenten Metall-Kationen als auch die Konzentrationen der relevanten Anionen, wie bspw. Phosphate und Sulfate, fortwährend analytisch überwacht werden müssen, um die Dosierung der chelatbildenden organischen Verbindung gemäß obiger Bedingung vornehmen zu können. Zwar wird im Betrieb einer Filtrationsanlage mit Umkehrosmose nach anfänglicher Aufkonzentrierung der ionogenen Komponenten schnell ein stationärer Zustand im Retentat erzeugt, dennoch unterliegen die Konzentrationen der polyvalenten Metall-Kationen leichten Schwankungen aufgrund variierender Zusammensetzungen der Stoffströme aus dem Spülbad, so dass eine ständige analytische Kontrolle der Ist-Zusammensetzung des Retentates dennoch notwendig ist. Daher wird im erfindungsgemäßen Verfahren die chelatbildende organische Zusammensetzung verhältnismäßig zur oben genannten Bedingung dem Retentat der Umkehrosmose im Überschuss zugeführt, indem der Teil des Spülwassers $A_0$ oder das bis zur ersten von m Umkehrosmosestufen hiervon kaskadierte Spülwasser $A_{1...n-m}$ mit einer solchen Menge an chelatbildenden organischen Verbindungen versetzt wird, dass das molare Verhältnis von Phosphonat-Gruppen zu polyvalenten Metall-Kationen $\Sigma Me_i$ im Retentat der ersten Umkehrosmose größer als 1 : 1 ist. Bei dieser Dosierung liegt bereits ein Grad an Komplexierung der polyvalenten Metall-Kationen durch die chelatbildende Verbindung vor, der stöchiometrisch formal jedes polyvalente Metall-Kation umfasst. Eine solche Dosierung erlaubt auch die Zugabe der chelatbildenden Verbindung unmittelbar in den Teil des Spülwassers Ao, der zur Aufbereitung aus dem Spülbad entnommen wird, da durch die Aufkonzentrierung der ionogenen Komponenten im Retentat der ersten Umkehrosmosestufe die Absolutkonzentration an freien, unkomplexierten polyvalenten Metall-Kationen nicht erhöht wird. Eine solche Erhöhung der Absolutkonzentration "freier polyvalenter Metall-Kationen" durch Aufkonzentration im Retentat der Umkehrosmose kann eine Überschreitung des Löslichkeitsproduktes gemäß Gleichung (I) und damit das Ausfällen von Metallsalzen und eine Membranverblockung bedingen, so dass der Zusatz des Chelatbildners, wobei die Äquivalentkonzentration an Phosphonat-Gruppen zugrunde gelegt wird, erfindungsgemäß in mehr als stöchiometrischer Menge bezogen auf die Konzentration der polyvalenten Metall-Kationen erfolgt.

Alternativ kann auch die Erhöhung der Leitfähigkeit im Permeat der Umkehrosmose, die bei einem Überschuss an Chelatbildner erfolgt, auch für die Regelung der Mindestmenge an Chelatbildner herangezogen werden. So ist eine

solche Verfahrensweise bzw. Steuerung der Dosierung des Chelatbildners ebenfalls bevorzugt, bei der der Teil des Spülwassers $A_0$ oder das bis zur ersten von m Umkehrosmosestufen hiervon kaskadierte Spülwasser $_{A1...n-m}$ mit einer solchen Menge an chelatbildenden organischen Verbindungen versetzt wird, dass die spezifische Leitfähigkeit des Permeates einer ersten Umkehrosmosestufe den Wert 30 μS/cm nicht unterschreitet. Wird dieser empirische Wert für die spezifische Leitfähigkeit unterschritten, liegt der Chelatbildner nicht im Überschuss vor, so dass potentiell eine Verblockung der Umkehrosmosemembran durch eine Ausfällung von Salzen der polyvalenten Metall-Kationen $Me_i$ erfolgen kann und die Spülwasseraufbereitung gefährdet.

Die Steuerung der Dosierung des HEDP anhand der Leitfähigkeit im Permeat der Umkehrosmose bietet zudem den Vorteil einer optimalen Prozesskontrolle. Liegen nämlich im Spülwasser zusätzlich dispergierte Feststoffe beispielsweise Hydolysate von Zirkon oder Titan oder unlösliche Carbonate von Kalzium vor, so können diese durch die Anwesenheit des Chelatbildners auf nanoskaliger Ebene stabilisiert werden ("Anti-Scaling-Effekt"). Gleichzeitig steht damit aber ein geringerer Anteil an Chelatbildner für die Komplexierung der polyvalenten Metall-Kationen $Me_i$ zur Verfügung, so dass bei analytischer Bestimmung des Gesamtgehalts an Chelatbildner je nach Bestimmungsmethode stets eine zu niedrige Dosierung gewählt wird, die ggf. nicht ausreicht, der Verblockung der Umkehrosmosemembran effektiv und dauerhaft entgegenzuwirken.

Die durch einen zu hohen Überschuss an chelatbildenden Verbindungen verursachte Verschlechterung der Trenneigenschaften der Umkehrosmosemembran und die damit verbundene Einwanderung von ionogenen Bestandteilen in das Permeat der Umkehrosmose wird erfindungsgemäß durch die Steuerung des molaren Verhältnisses von Phosphonat-Gruppen des Chelatbildners zur Gesamtmenge an polyvalenten Metall-Kationen vermieden. Erfindungsgemäß wird daher der Teil des Spülwassers $A_0$ oder das bis zur ersten von m Umkehrosmosestufen hiervon kaskadierte Spülwasser $A_{1...n-m}$ mit einer solchen Menge an chelatbildenden organischen Verbindungen versetzt, dass das molare Verhältnis von Phosphonat-Gruppen zu polyvalenten Metall-Kationen $\Sigma Me_i$ im Retentat der ersten Umkehrosmose nicht größer als 3 : 1 ist.

Die wasserlöslichen, chelatbildenden organischen Verbindungen, die zumindest eine Phosphonat-Gruppe aufweisen, sind vorzugsweise ausgewählt aus 1-Hydroxyethyliden-1,1-diphosphonsäure (HEDP), Diethylentriamin-penta(methylenphosphonsäure) (DTPMP) und/oder 2-Phosphonobutan-1,2,4-tricarbonsäure (PBM-AM) sowie deren Alkali- oder Ammoniumsalze. Besonders bevorzugt ist 1-Hydroxyethan-1,1-diphosphonsäure (HEDP) für die Komplexierung solcher polyvalenten Metall-Kationen, die aus der phosphatierenden Behandlung von Metalloberflächen in das Spülwasser eingeschleppt werden, bspw. Zink-, Eisen-, Mangan-, Kalzium-, Aluminium- und Nickel-Ionen.

Zusätzlich kann der Chelatbildner ausgewählt sein aus Aminverbindungen entsprechend der allgemeinen Strukturformel (A):

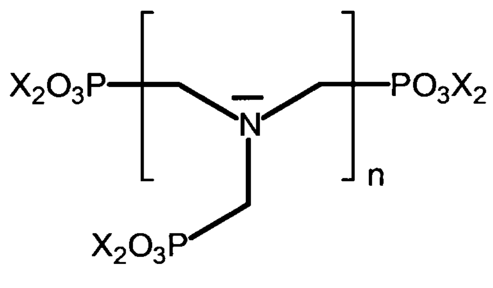

(A)

wobei n mindestens 1, aber nicht größer als 8 und vorzugsweise 3 ist, und die Substituenten X unabhängig voneinander ausgewählt sind aus Wasserstoffatomen, Alkalimetall-Kationen, Ammonium-Ionen, quarternären Ammoniumverbindungen oder aliphatischen Resten mit nicht mehr als 4 C-Atomen, vorzugsweise aus Wasserstoffatomen und Alkalimetall-Kationen.

Hierzu gehören als explizite Vertreter dieser Verbindungsklasse Nitrilotris-(methylen-phosphonsäure), Ethylendiamin-tetrakis-(methylenphosphonsäure), Diethylentriamin-pentakis-(methylenphosphonsäure), Triethylentetramin-hexakis-(methylenphosphonsäure), Tetraethylenpentamin-heptakis-(methylenphosphonsäure), Pentaethylenhexaminoktakis-(methylenphosphonsäure), Hexaethylenheptamin-nonakis-(methylenphosphonsäure) und Heptaethylenoctamin-dekakis-(methylenphosphonsäure) sowie deren teilweise und vollständig neutralisierten Ammonium- und/oder Alkalimetallsalze.

Aufgrund ihrer hervorragenden Trenneigenschaften sind im erfindungsgemäßen Verfahren zumindest für die ersten Umkehrosmosestufe Membranen bevorzugt, die auf einem Komposit enthaltend zumindest ein Polyamid basieren. Solche PolyamidMembranen werden üblicherweise durch Grenzphasenpolymerisation von Phenylendiaminen mit Säurehalogeniden auf porösen Materialien hergestellt und sind beispielsweise in der EP 0316525 beschrieben.

Zur Abtrennung von polymeren Verbindungen, dispergierten Feststoffen, Tensiden und Ölen, die bspw. als Rückstände von Bearbeitungsölen oder von Korrosionsschutzölen auf den Metalloberflächen des Bauteils in das Spülwasser gelangen, aus dem Spülwasser ist der Einsatz von Ultrafiltrationsstufen im erfindungsgemäßen Verfahren bevorzugt. Demgemäß liegt bei kaskadierendem Durchlauf des Teils des Spülwassers $A_0$ in einer Anzahl n an Cross-Flow-Filtrationsstufen $F_{1...n}$ zumindest eine Ultrafiltrationsstufe vor, wobei jede Ultrafiltration in der Kaskade vor der ersten Umkehrosmose erfolgt.

Zumindest eine dieser Ultrafiltrationsstufen hat in einer weiteren bevorzugten Ausführung des erfindungsgemäßen Verfahrens eine Ausschlussgrenze von weniger als 100 kD, besonders bevorzugt von weniger als 40 kD, um die Abtrennung von Tensiden und Ölen aus dem Spülwasser möglichst vollständig vorzunehmen, da diese im Retentat der Umkehrosmose ebenfalls eine Verblockung der Umkehrosmosemembran verursachen können.

Die Wiederaufbereitung des Spülwassers von nasschemisch behandelten Bauteilen beinhaltet vorzugsweise zudem, dass das Permeat des Spülwassers der letzten Umkehrosmosestufe direkt in das Spülwasser zur Reinigung der nasschemisch behandelten Bauteile zurückgespeist wird. Das Permeat der letzten Umkehrosmosestufe besitzt eine geringe Ionenfracht und eine niedrige spezifische Leitfähigkeit von vorzugsweise nicht mehr als 800 $\mu$S/cm, besonders bevorzugt nicht mehr als 500 $\mu$S/cm und kann daher unmittelbar in das Spülwasser zurückgespeist werden.

Darüber hinaus ist auch die Wiederverwertung der im Retentat der ersten Umkehrosmosestufe aufkonzentrierten polyvalenten Metall-Kationen im erfindungsgemäßen Verfahren zur Aufbereitung von Spülwasser vorgesehen, so dass vorzugsweise das Retentat der ersten Umkehrosmose in die nasschemische Behandlungsstufe zurückgeführt wird.

Ausführungsbeispiel:

Als Anwendungsbeispiel des erfindungsgemäßen Verfahrens dient die Spülwasseraufbereitung eines alkalischen Reinigungs- und Entfettungsbades (Ridoline® 1536, Fa. Henkel) für Automobilkarosserien in einer Phosphatieranlage. Spezifische Badparameter wurden analytisch bestimmt und mit der Unterbindung einer Verblockung der Umkehrosmosemembran einerseits und dem Trenneigenschaften derselben Membran andererseits korreliert.

In Abbildung 1 ist die Verfahrenskette zur Spülwasseraufbereitung schematisch abgebildet. Dem Spülwasser wird dabei ein Volumenstrom $V_1$ von 1150 l/h entnommen und dem Arbeitsbehälter W1 der Ultrafiltration zugeführt, aus dem wiederum die Ultrafiltrationsstufe $F_1$ mit einem gleich großen Volumenstrom $V_1$ gespeist wird. Das aufkonzentrierte Retentat enthaltend Öl, Tenside und Feststoffe aus dem Reinigungs- und Entfettungsbad B1 wird mit einem Volumenstrom $V_1^R$ von 50 l/h verworfen, während das Permeat der Ultrafiltrationsstufe $F_1$ den Arbeitsbehälter der Umkehrosmose W2 mit dem Volumenstrom $V_1^P$ speist, wobei gleichzeitig ein gleich großer Volumenstrom $V_2$ in die Umkehrosmosestufe $F_2$ eingespeist wird. Das Retentat der Umkehrosmosestufe $F_2$ enthaltend eine aufkonzentrierte Lösung der polyvalenten Metall-Kationen $Me_i$ wird mit einem Volumenstrom $V_2^R$ abgeführt. Die polyvalenten Metall-Kationen $Me_i$ werden zuvor im alkalischen Reinigungs- und Entfettungsbad aus den Metalloberflächen der Automobilkarosserie herausgebeizt und über den anhaftenden Nassfilm und schöpfende Teile der Karosserie in das Spülwasser eingeschleppt. Das Permeat der Umkehrosmose wird mit dem Volumenstrom $V_2^P$ von 950 l/h in das Spülwasserbad B2 zurückgespeist. Zusätzlich wird dem Spülwasserbad B2 kontinuierlich entionsiertes Wasser mit dem Volumenstrom $V_e$ zugeführt. In der schematischen Abbildung 1 sind lediglich die Nettovolumenströme dargestellt. Im technischen Prozess wird zusätzlich ein Teil des Volumen der Arbeitsbehälter $W_{1,2}$ über die jeweilige Filtrationsstufe $F_{1,2}$ im Kreislauf geführt, so dass sich im jeweiligen Retentat eine stationäre Konzentration an zurückgehaltenden Verbindungen einstellt. Die Dosierung des Chelatbildners 1-Hydroxyethyliden-1,1-Diphosphonsäure (HEDP) erfolgt im Arbeitsbehälter der Ultrafiltration W1 als 31 %ige neutrale wässrige Lösung des Chelatbildners mit dem Volumenstrom $V_{HEDP}$.

Die Ultrafiltration in der Filtrationsstufe $F_1$ erfolgte mit 4 bar Betriebsdruck über eine Polyethersulfon-basierte Membran FK20-FO-FUS0382 (Microdyn-Nadir GmbH) mit einer Ausschlussgrenze von 30 kD.

Die Umkehrosmose in der Filtrationsstufe $F_2$ erfolgte mit 20 bar Betriebsdruck über eine Polyamid-basierte Membran FILMTEC BW30-365 (The Dow Chemical Company).

Zur Bestimmung der Trenneigenschaften der Umkehrosmosemembran als Funktion des Gehaltes an Chelatbildner (Tabelle 1) werden die relevanten Komponenten im Retentat und Permeat der Ultrafiltrationsstufe als stationäre Momentaufnahmen in der Spülwasseraufbereitungsanlage analytisch bestimmt und die dazugehörige spezifische Leitfähigkeit sowie der pH-Wert gemessen.

Aus der Tabelle 1 geht zunächst hervor, dass eine Verblockung der Umkehrosmosemembran für alle Zusammensetzungen des Retentats (R1-R4) in Gegenwart des Chelatbildners HEDP effektiv unterbunden wird, wobei das molare Verhältnis von Phosphonatgruppen des Chelatbilnders $c[PO_3]$ zur Gesamtmenge an polyvalenten Metall-Kationen $c[\Sigma Me_i]$ zumindest 1,3 beträgt. Jedoch findet in Abwesenheit von HEDP im Retentat R1, also bei den dort vorliegenden Konzentrationen an polyvalenten Metall-Kationen, eine Verblockung der Membran statt.

Mit steigendem molaren Verhältnis $c[PO_3] : c[\Sigma Me_i]$ nimmt die Trennleistung der Umkehrosmosemembran stetig ab, so dass die ionalen Konzentrationen im Permeat und damit die Leitfähigkeit des Permeats stetig zunimmt. Insbesondere wird die Durchlässigkeit für Anionen und monovalente Metall-Kationen erhöht. Um den Anforderungen an das Spülwasser gerecht zu werden, ist es daher bevorzugt nur soviel HEDP dem Spülwasser vor der Ultrafiltrationsstufe hinzuzudosieren, dass die spezifische Leitfähigkeit 0,5 mS/cm nicht überschreitet und/oder das molare Verhältnis c[$PO_3$]: c[$\Sigma Me_i$] den Wert 3 : 1 nicht überschreitet. Wird der Wert für dieses Verhältnis im Retentat R4 überschritten, erhöht sich die Konzentration der polyvalenten Metall-Kationen im Permeat P4 signifikant. Die Durchlässigkeit der Membran bezüglich der polyvalenten Metall-Kationen wird bei einem derartigen Überschuss an HEDP offensichtlich deutlich erhöht.

Zusätzlich wird aus der chemischen Analyse des Retentats und Permeats deutlich, dass die Verschlechterung der Trenneigenschaften der Umkehrosmosemembran bei erhöhtem Anteil an Chelatbildner ionenspezifisch verläuft und die Durchlässigkeit der Membran vorwiegend für monovalente Kationen und Carbonat-Anionen erhöht wird. Die Trennleistung für die polyvalenten Metall-Kationen und Phosphat-Anionen verschlechtert sich nur geringfügig.

Tab.1
Analyseparameter des Retentats und Permeats der Umkehrosmose bei ansteigendem Verhältnis des Chelatbildners 1-Hydroxyethyliden-1,1-Diphosphonsäure (HEDP) zur Gesamtmenge der polyvalenten Metall-Kationen $\Sigma Me_i$

| | | Retentat | | | | Permeat | | | |
|---|---|---|---|---|---|---|---|---|---|
| | | R1 | R2 | R3 | R4 | P1 | P2 | P3 | P4 |
| HEDP ges.& | [mg/l] | 370 | 700 | 1100 | 2300 | <10 | 10 | <10 | 75 |
| HEDP geb.* | [mg/l] | 370 | 659 | 928 | 941 | - | - | - | 17 |
| HEDP frei # | [mg/l] | - | 41 | 127 | 1359 | <10 | <10 | <10 | 58 |
| Leitwert | [mS/cm] | 7,7 | 8,4 | 10,2 | 12,7 | 0,08 | 0,5 | 0,8 | 1,4 |
| pH | | 10,2 | 10,0 | 10,0 | 10,0 | 9,9 | 9,8 | 9,9 | 9,9 |
| $CO_3$ | [mg/l] | 2200 | 1700 | 4900 | 3800 | 25 | 230 | 400 | 440 |
| $PO_4$ | [mg/l] | 870 | 980 | 1400 | 1600 | <10 | 30 | 70 | 140 |
| Zn | [mg/l] | 5 | 46 | 54 | 110 | < 1 | < 1 | <1 | 2 |
| Fe | [mg/l] | 140 | 160 | 220 | 160 | <1 | <1 | <1 | 3 |
| Al | [mg/l] | 5 | 26 | 42 | 58 | <1 | <1 | <1 | 1 |
| K | [mg/l] | 3143 | 3700 | 4800 | 5200 | 30 | 180 | 270 | 430 |
| c[$PO_3$] : c | [$\Sigma Me_i$] | 1,3 | 1,5 | 1,7 | 3,3 | - | - | - | - |
| Membranverblockung | | nein § | nein | nein | nein | - | - | - | - |

& bestimmt mittels Ionenchromatographie (Carbo Pack, Fa. Dionex) im KCI-Gradienten enthaltend 3,2 mM EDTA nach Kalibrierung mit einer HEDP Standard-Lösung

* berechnet als ladungsäquivalente Menge von $HEDP^{4-}$ zur Gesamtmenge $\Sigma Me_i$ der polyvalenten Kationen $Zn^{2+}$, $Fe^{3+}$ und $Al^{3+}$

\# berechnet als Differenz von HEDP ges. und HEDP geb.

§ Retentat 1 führt in Abwesenheit von HEDP zur Verblockung der Umkehrosmosemembran (Leitwert im Permeat 1 ohne HEDP ca. 20 µS/cm)

## Patentansprüche

1. Verfahren zur Aufbereitung von Spülwasser aus der Reinigung von nasschemisch behandelten Bauteilen, die zumindest teilweise metallische Oberflächen aufweisen, enthaltend polyvalente Metall-Kationen $Me_i$, wobei zumindest ein Teil des Spülwassers $A_0$ eine Cross-Flow-Filtrationsstufe $F_1$ oder kaskadierend eine Anzahl n an Cross-Flow-Filtrationsstufen $F_{1...n}$ durchläuft, wobei jede Filtrationsstufe $F_n$ mit dem Permeat $A_{n-1}$ der vorherigen Filtrationsstufe $F_{n-1}$ gespeist wird und zumindest eine Filtrationsstufe vorliegt, die eine Umkehrosmosestufe darstellt, wobei das Permeat der ersten Umkehrosmosestufe keine weitere Stufe einer anderen Art der Cross-Flow-Filtration als der Umkehrosmose durchläuft, **dadurch gekennzeichnet, dass** der Teil des Spülwassers $A_0$ oder das bis zu dieser ersten von m Umkehrosmosestufen hiervon kaskadierte Spülwasser $A_{1...n-m}$ mit einer solchen Menge an wasserlöslichen chelatbildenden organischen Verbindungen, die zumindest eine Phosphonat-Gruppe aufweisen, versetzt wird, dass das molare Verhältnis von Phosphonat-Gruppen zu polyvalenten Metall-Kationen $\Sigma Me_i$ im Retentat der ersten Umkehrosmose größer als 1 : 1, aber nicht größer als 3 : 1 ist.

2. Verfahren gemäß Anspruch 1, **dadurch gekennzeichnet, dass** im Teil des Spülwassers $A_0$ oder im bis zur ersten von m Umkehrosmosestufen hiervon kaskadierten Spülwasser $A_{1...n-m}$ nur eine solche Menge an chelatbildenden organischen Verbindungen enthalten ist, dass die spezifische Leitfähigkeit des Permeates einer ersten Umkehrosmosestufe den Wert 500 $\mu$S/cm nicht überschreitet.

3. Verfahren gemäß einem oder mehreren der vorherigen Ansprüche, **dadurch gekennzeichnet, dass** der Teil des Spülwassers $A_0$ oder das bis zur ersten von m Umkehrosmosestufen hiervon kaskadierte Spülwasser $A_{1...n-m}$ mit einer solchen Menge an wasserlöslichen chelatbildenden organischen Verbindungen versetzt wird, dass das jeweils niedrigste Löslichkeitsprodukt aller im Retentat der Umkehrosmose möglichen Salze $Me_mX_n$ eines polyvalenten Metall-Kations $Me_i$ jeweils größer ist als das entsprechende Ionenprodukt aus der jeweiligen Anionkonzentration X mit der um die auf den Anteil der Metall-Kationen $Me_i$ am Gesamtgehalt der polyvalenten Metall-Kationen $\Sigma Me_i$ gewichteten Konzentration der Phosphonat-Gruppen der wasserlöslichen chelatbildenden organischen Verbindung verminderten Konzentration des betreffenden polyvalenten Metall-Kations $Me_i$ im Retentat der Umkehrosmose.

4. Verfahren gemäß einem oder mehreren der vorherigen Ansprüche, **dadurch gekennzeichnet, dass** der Teil des Spülwassers $A_0$ oder das bis zur ersten von m Umkehrosmosestufen hiervon kaskadierte Spülwasser $A_{1...n-m}$ mit einer solchen Menge an chelatbildenden organischen Verbindungen versetzt wird, dass das molare Verhältnis von Phosphonat-Gruppen zu polyvalenten Metall-Kationen $\Sigma Me_i$ im Retentat der ersten Umkehrosmose größer 1:1.

5. Verfahren gemäß einem oder mehreren der vorherigen Ansprüche, **dadurch gekennzeichnet, dass** die chelatbildenden organischen Verbindungen ausgewählt sind aus 1-Hydroxyethyliden-1,1-diphosphonsäure (HEDP), Diethylentriaminpenta(methylenphosphonsäure) (DTPMP) und/oder 2-Phosphonobutan-1,2,4-tricarbonsäure (PBM-AM) sowie deren Alkali- oder Ammoniumsalze.

6. Verfahren gemäß Anspruch 5, **dadurch gekennzeichnet, dass** die chelatbildenden organischen Verbindungen zusätzlich ausgewählt sind aus Aminverbindungen entsprechend der allgemeinen Strukturformel (A):

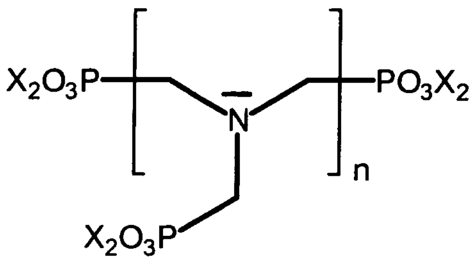

(A)

wobei n mindestens 1, aber nicht größer als 8 und vorzugsweise 3 ist, und die Substituenten X unabhängig voneinander ausgewählt sind aus Wasserstoffatomen, Alkalimetall-Kationen, Ammonium-Ionen, quarternären Ammoniumverbindungen oder aliphatischen Resten mit nicht mehr als 4 C-Atomen, vorzugsweise aus Wasserstoffatomen und Alkalimetall-Kationen.

7. Verfahren gemäß einem oder mehreren der vorherigen Ansprüche, **dadurch gekennzeichnet, dass** die Membran der ersten Umkehrosmosestufe aus Polyamiden hergestellt ist.

8. Verfahren gemäß einem oder mehreren der vorherigen Ansprüche, **dadurch gekennzeichnet, dass** bei kaskadierendem Durchlauf des Teils des Spülwassers $A_0$ in einer Anzahl n an Cross-Flow-Filtrationsstufen $F_{1...n}$ zumindest eine Ultrafiltrationsstufe vorliegt, wobei jede Ultrafiltration in der Kaskade vor der ersten Umkehrosmose erfolgt.

9. Verfahren gemäß Anspruch 8, **dadurch gekennzeichnet, dass** zumindest eine Ultrafiltrationsstufe mit einer Ausschlussgrenze von weniger als 100 kD, vorzugsweise weniger als 40 kD eingesetzt wird.

10. Verfahren gemäß einem oder mehreren der vorherigen Ansprüche, **dadurch gekennzeichnet, dass** das Permeat des Spülwassers der letzten Umkehrosmosestufe direkt in das Spülwasser zur Reinigung der nasschemisch behandelten Bauteile zurückgespeist wird.

11. Verfahren gemäß einem oder mehreren der vorherigen Ansprüche, **dadurch gekennzeichnet, dass** das Retentat der ersten Umkehrosmosestufe in die nasschemische Behandlungsstufe zurückgeführt wird.

## Claims

1. Method for treating rinse water from the cleaning of components subjected to wet chemical treatment which have at least partially metallic surfaces, the rinse water containing polyvalent metal cations $Me_i$, at least a portion of the rinse water $A_0$ passing through a cross-flow filtration step $F_1$ or passing through a number n of cross-flow filtration steps $F_{1...n}$ in a cascade, each filtration step $F_n$ being fed with the permeate $A_{n-1}$ of the preceding filtration step $F_{n-1}$, and at least one filtration step being present which represents a reverse osmosis step, wherein the permeate of the first reverse osmosis step does not pass through a further step of a different type of cross-flow filtration than reverse osmosis, **characterized in that** the portion of the rinse water $A_0$ or the rinse water $A_{1...n-m}$ cascaded therefrom up to this first of m reverse osmosis steps is combined with a quantity of water-soluble chelate-forming organic compounds containing at least one phosphonate group, such that the molar ratio of phosphonate groups to polyvalent metal cations $\Sigma Me_i$ in the retentate of the first reverse osmosis is greater than 1 : 1, but not greater than 3 : 1.

2. Method according to Claim 1, **characterized in that** in the portion of the rinse water $A_0$ or in the rinse water $A_{1...n-m}$ cascaded therefrom up to the first of m reverse osmosis steps, only such a quantity of chelate-forming organic compounds is contained that the specific conductivity of the permeate of a first reverse osmosis step does not exceed the value 500 $\mu$S/cm.

3. Method according to one or more of the preceding claims, **characterized in that** the portion of the rinse water $A_0$ or the rinse water $A_{1...n-m}$ cascaded therefrom up to the first of m reverse osmosis steps is combined with a quantity of water-soluble chelate-forming organic compounds such that the lowest solubility product in each case of all possible salts $Me_mX_n$ of a polyvalent metal cation $Me_i$ in the retentate of the reverse osmosis is in each case greater than the corresponding ion product of the respective anion concentration X and the concentration of the particular polyvalent metal cations $Me_i$ in the retentate of the reverse osmosis, reduced by the concentration of the phosphonate groups of the water-soluble chelate-forming organic compound weighted by the portion of the metal cations $Me_i$ in the total content of the polyvalent metal cations $\Sigma Me_i$.

4. Method according to one or more of the preceding claims, **characterized in that** the portion of the rinse water $A_0$ or the rinse water $A_{1...n-m}$ cascaded therefrom up to the first of m reverse osmosis steps is combined with such a quantity of chelate-forming organic compounds that the molar ratio of phosphonate groups to polyvalent metal cations $\Sigma Me_i$ in the retentate of the first reverse osmosis is greater than 1 : 1.

5. Method according to one or more of the preceding claims, **characterized in that** the chelate-forming organic compounds are selected from 1-hydroxyethylidene-1,1-diphosphonic acid (HEDP), diethylenetriamine penta(methylene phosphonic acid) (DTPMP), and/or 2-phosphonobutane-1,2,4-tricarboxylic acid (PBM-AM) and their alkali or ammonium salts.

6. Method according to Claim 5, **characterized in that** the chelate-forming organic compounds are additionally selected from amine compounds corresponding to the general structural formula (A):

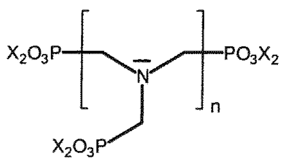

(A)

where n is at least 1 but not greater than 8, and is preferably 3, and the substituents X are independently selected from hydrogen atoms, alkali metal cations, ammonium ions, quaternary ammonium compounds, or aliphatic radicals containing no more than 4 C atoms, preferably selected from hydrogen atoms and alkali metal cations.

7. Method according to one or more of the preceding claims, **characterized in that** the membrane of the first reverse osmosis step is produced from polyamides.

8. Method according to one or more of the preceding claims, **characterized in that** during the passage of the portion of the rinse water $A_0$ through a number n of cross-flow filtration steps $F_{1...n}$ in a cascade, at least one ultrafiltration step is present, wherein each ultrafiltration in the cascade takes place prior to the first reverse osmosis.

**9.** Method according to Claim 8, **characterized in that** at least one ultrafiltration step is used with an exclusion limit of less than 100 kD, preferably less than 40 kD.

**10.** Method according to one or more of the preceding claims, **characterized in that** the permeate of the rinse water from the last reverse osmosis step is fed back directly into the rinse water for cleaning the components subjected to wet chemical treatment.

**11.** Method according to one or more of the preceding claims, **characterized in that** the retentate of the first reverse osmosis step is returned to the wet chemical treatment step.

**Revendications**

**1.** Procédé de traitement d'eau de rinçage provenant du nettoyage de composants traités chimiquement par voie humide, lesquels présentent au moins partiellement des surfaces métalliques contenant des cations métalliques polyvalents $Me_i$, au moins une partie de l'eau de rinçage $A_0$ passant par un étage de filtration à écoulement transversal $F_1$, ou en cascade par un nombre n d'étages de filtration à écoulement transversal $F_{1...n}$, chaque étage de filtration $F_n$ étant alimenté en perméat $A_{n-1}$ de l'étage de filtration précédent $F_{n-1}$ et au moins un étage de filtration étant un étage d'osmose inverse, le perméat du premier étage d'osmose inverse ne passant par aucun autre étage d'un type de filtration à écoulement transversal autre que l'osmose inverse, **caractérisé en ce que** la partie de l'eau de rinçage $A_0$ ou l'eau de rinçage $A_{1...n-m}$ ramenée en cascade jusqu'au premier des m étages d'osmose inverse est mélangée à une quantité de composés organiques chélatants hydrosolubles, comportant au moins un groupe phosphonate, telle que le rapport molaire des groupes phosphonate sur les cations métalliques polyvalents $\Sigma Me_i$ dans le rétentat de la première osmose inverse est supérieur à 1:1, mais non supérieur à 3:1.

**2.** Procédé selon la revendication 1, **caractérisé en ce que** la partie de l'eau de rinçage $A_0$ ou l'eau de rinçage $A_{1...n-m}$ ramenée en cascade jusqu'au premier des m étages d'osmose inverse contient seulement une quantité de composés organiques chélatants telle que la conductivité spécifique du perméat d'un premier étage d'osmose inverse ne va pas au-delà de la valeur de 500 $\mu$S/cm.

**3.** Procédé selon l'une ou plusieurs des revendications précédentes, **caractérisé en ce que** la partie de l'eau de rinçage $A_0$ ou l'eau de rinçage $A_{1...n-m}$ ramenée en cascade jusqu'au premier des m étages d'osmose inverse est mélangée à une quantité de composés organiques chélatants hydrosolubles telle que le produit de solubilité à chaque fois le plus faible de tous les sels $Me_mX_n$ d'un cation métallique polyvalent $Me_i$, qui peuvent se trouver dans le rétentat de l'osmose inverse, est à chaque fois supérieur au produit ionique correspondant de la concentration d'anions X respective et la concentration du cation métallique polyvalent $Me_i$ dans le rétentat de l'osmose inverse diminuée par la concentration des groupes phosphonate du composé organique chélatant hydrosoluble, pondérée du pourcentage de cations métalliques $Me_i$ de la teneur totale en cations métalliques polyvalents $\Sigma Me_i$.

**4.** Procédé selon l'une ou plusieurs des revendications précédentes, **caractérisé en ce que** la partie de l'eau de rinçage ou l'eau de rinçage $A_{1...n-m}$ ramenée en cascade jusqu'au premier des m étages d'osmose inverse est ajoutée à une quantité de composés organiques chélatants telle que le rapport molaire des groupes phosphonate sur les cations métalliques polyvalents $\Sigma Me_i$ dans le rétentat de la première osmose inverse est supérieur à 1:1.

**5.** Procédé selon l'une ou plusieurs des revendications précédentes, **caractérisé en ce que** les composés organiques chélatants sont choisis parmi l'acide 1-hydroxyéthylidène-1,1-diphosphonique (HEDP), l'acide diéthylènetriaminpenta(méthylènephosphonique) (DTPMP) et/ou l'acide 2-phosphonobutane-1,2,4-tricarboxylique (PBM-AM) ainsi que leurs sels d'alcalin ou d'ammonium.

**6.** Procédé selon la revendication 5, **caractérisé en ce que** les composés organiques chélatants sont en outre choisis parmi les composés aminés répondant à la formule structurelle générale (A) :

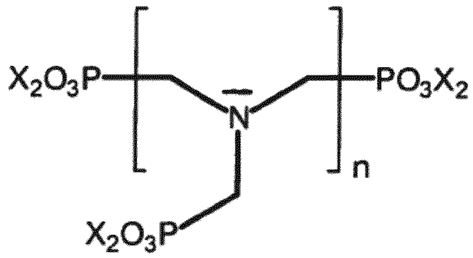

(A)

où n est au moins 1 mais inférieur à 8, et de préférence 3, et les substituants X sont choisis indépendamment l'un de l'autre parmi les atomes d'hydrogène, les cations de métaux alcalins, les ions ammonium, les composés d'ammonium quaternaire ou les radicaux aliphatiques n'ayant pas plus de 4 atomes de carbone, de préférence parmi les atomes d'hydrogène et les cations de métaux alcalins.

7. Procédé selon l'une ou plusieurs des revendications précédentes, **caractérisé en ce que** la membrane du premier étage d'osmose inverse est réalisée à partir de polyamides.

8. Procédé selon l'une ou plusieurs des revendications précédentes, **caractérisé en ce que**, lorsque la partie de l'eau de rinçage $A_0$ passe en cascade dans un nombre n d'étages de filtration à écoulement transversal $F_{1...n}$, il y a au moins un étage d'ultrafiltration, chaque ultrafiltration de la cascade étant effectuée avant la première osmose inverse.

9. Procédé selon la revendication 8, **caractérisé en ce qu'**au moins un étage d'ultrafiltration est utilisé avec un seuil de coupure de moins de 100 kD, de préférence de moins de 40 kD.

10. Procédé selon l'une ou plusieurs des revendications précédentes, **caractérisé en ce que** le perméat de l'eau de rinçage du dernier étage d'osmose inverse est réinjecté directement dans l'eau de rinçage en vue du nettoyage des composants traités chimiquement par voie humide.

11. Procédé selon l'une ou plusieurs des revendications précédentes, **caractérisé en ce que** le rétentat du premier étage d'osmose inverse est ramené dans l'étage de traitement chimique par voie humide.

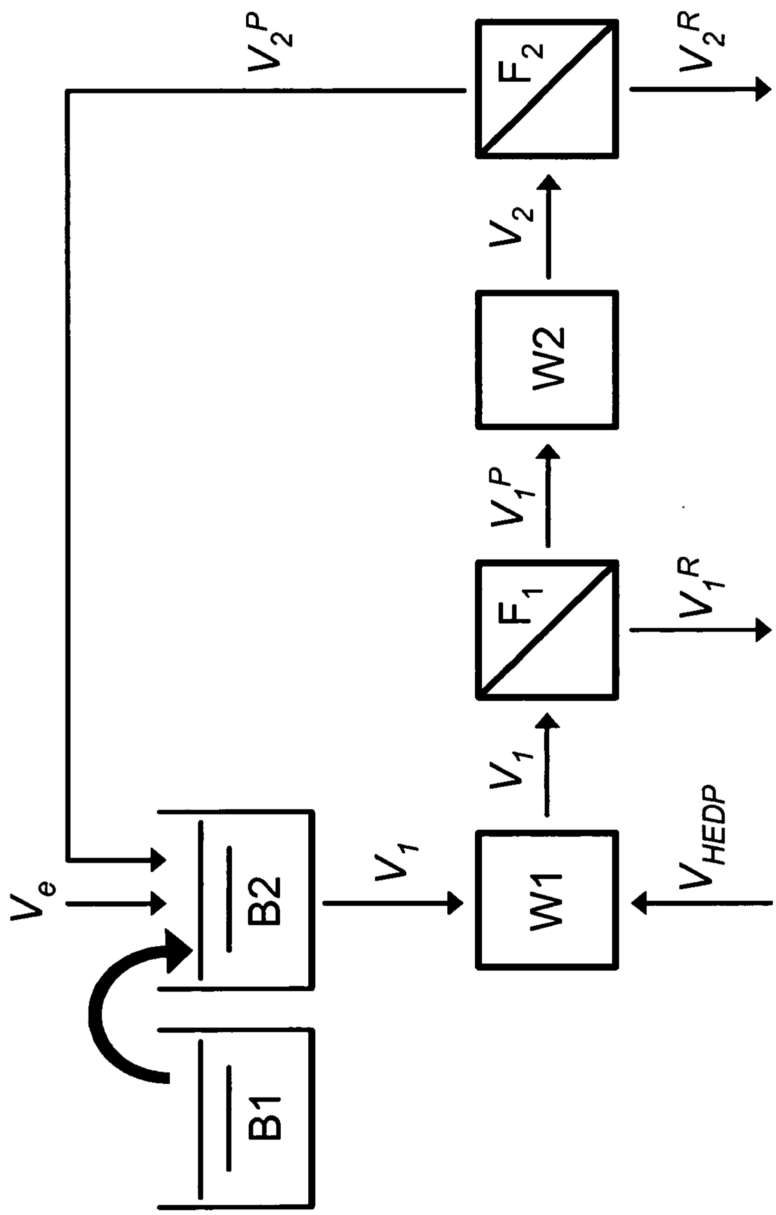


Abbildung 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1424311 A
- WO 2006128730 A1
- EP 0316525 A